# EUROPEAN PATENT APPLICATION

(11) **EP 4 317 366 A2**
(43) Date of publication of application: **07.02.2024**
(21) Application number: 23218459.8
(22) Date of filing: 23.03.2018
(51) Int. Cl.: C10B 1/10

(54) **CARBONIZATION AND ACTIVATION OF MDF**

(30) Priority: 23.03.2017 EP 17162615
(62) Divisional of application: 18711596.9
(71) Applicant: Act&Sorb, 3600 Genk (BE)
(72) Inventor: VANREPPELEN, Kenny, 3500 Hasselt (BE)
(74) Representative: Forresters IP LLP

(57) **Abstract**

According to an embodiment, a process for manufacturing char from an input product (120) comprising carbon is disclosed. The process comprises the following steps: i) providing the input product (120) to a furnace (102); ii) carbonizing the input product in the furnace by pyrolysis thereby obtaining an intermediate product (121) comprising char and a waste gas (130); iii) evacuating at least part of the waste gas from the furnace by first forcing the at least part of the waste gas through the 10 intermediate product (121) thereby obtaining an output product comprising the char (122); and iv) obtaining the output product from the furnace (102).

## Description

### Field of the Invention

The present invention generally relates to a process for manufacturing char, a process for manufacturing activated carbon, a device for manufacturing char and a device for manufacturing activated carbon.

### Background of the Invention

Activated carbon or activated charcoal is a form of carbon with a high degree of porosity thereby exceeding a surface area of 500 square metre per gram of activated carbon. Activated carbon can be made from materials that comprise a high degree of carbon such as for example from coconut husk, wood, coal, petroleum etc. The process for making the activated carbon comprises two steps, a pyrolysis or carbonization step and an activation step. During the carbonization step the carbon containing starting material is heated to temperatures between 500 and 800 degrees Celsius in an oxygen deficient atmosphere. During this step a gaseous and a solid output stream is obtained. The gaseous stream comprises light gasses and tar and the solid material comprises char and solid by-products such as ashes. During the second activation step, the surface area of the char is greatly increased. Activation may for example be done by overheated steam at a temperature of at least 800 degrees Celsius. Activation may also be done by chemical activation at lower temperatures.

An issue that typically occurs is the treatment of the gaseous output stream. First of all, the tar in the output stream will condensate upon cooldown of the gas into tar which can cause clogging in the gas extraction path of the oven. Second, the input material typically comprises an amount of nitrogen that is converted during the carbonization and activation and released as nitrogen-containing volatiles including nitrogen oxides (NOₓ) precursor gasses such as ammonia, hydrogen cyanide, isocyanic acid and nitrogen oxides; and toxic contaminants like organic nitrogenated compounds which are all highly undesirable from an ecological point of view.

### Summary of the Invention

It is an object of the present invention to solve the above problems and to provide a solution for making char and activated carbon with cleaner output gasses, i.e., gasses comprising less tar and less nitrogen oxides.

According to a first aspect, this object is achieved by a process for manufacturing char from an input product comprising carbon; the process comprises the following steps:
- providing the input product to a furnace; and
- carbonizing the input product in the furnace by pyrolysis thereby obtaining an intermediate product comprising char and a waste gas;
- evacuating at least part of the waste gas from the furnace by first forcing the at least part of the waste gas through the intermediate product thereby obtaining an output product comprising the char;
- obtaining the output product from the furnace.

In other words, when the input product is cracked into a solid phase comprising the char and a gaseous phase, this gaseous phase or waste gas is not directly extracted from the furnace, but forced again through the intermediate product. By this forced evacuation, contact between the hot waste gas and the char is achieved which results in a solid-gas reaction between the hot waste gas and the hot char within the intermediate product. By this reaction, the complex organic molecules in the waste gas are further cracked into smaller molecules thereby reducing the amount of tar. It is thus an advantage that a waste gas is obtained with less complex organic molecules when compared with the waste gas before the reaction. The waste gas resulting from the above process is thus much cleaner than from the processes as known from the art.

Char should be understood as the solid material obtained from the carbonisation of organic material, i.e., by the thermo-chemical conversion in an oxygen-limited environment of the organic material. Char typically comprises at least 50% in weight of carbon to be considered as char. Char further has a typical surface area between 1m²/g to 1000m²/g.

Summarized, before evacuating the output waste gas from the furnace the following steps are implicitly performed by the above process:
- obtaining a solid-gas reaction between the waste gas and the char of the intermediate product, and
- by the solid-gas reaction, cracking molecules in the waste gas thereby obtaining an output waste gas.

Advantageously, the input product comprises at least 50% in weight of carbon.

Moreover, when the input product comprises nitrogen, the waste gas will also comprise nitrogen containing components. By the evacuating according to the above process, the following steps will be implicitly performed:
- obtaining a solid-gas reaction between the nitrogen in the waste gas and the intermediate product; and
- by the solid-gas reaction, loading the intermediate product with the nitrogen thereby obtaining the output product that further comprises the nitrogen.

The char in the intermediate product will thus be loaded with the nitrogen from the waste gas, i.e., the nitrogen is encapsulated into the porous char. It is thus an advantage that the resulting waste gas will have a lower fraction of nitrogen oxides.

Moreover, by selecting the amount of nitrogen in the input product, the amount of loading of nitrogen can be selected. Activated carbon that is loaded with nitrogen is an end product where there is a demand for in today's industry because the nitrogen improves the absorption characteristics of the activated carbon for some components. Therefore, it is an advantage that, by the above process, char can be obtained that is loaded with nitrogen while have a waste gas with less nitrogen oxides. For example, an input product with at least 2% in weight of nitrogen is already sufficient for obtaining nitrogen loaded char.

For loading char with nitrogen, it is particularly advantageous to use an input material that comprises Medium-density fibreboard (MDF). The nitrogen is then obtained from the glue and resins in the MDF, e.g. urea-formaldehyde, urea-melamine-formaldehyde, melamine-formaldehyde. It is thus an advantage that from MDF waste material, a nitrogen loaded char is obtained with cleaner waste gasses.

The process according to the present invention is further characterized in that it comprises the step of piling up the intermediate product in a pile in the furnace and evacuating the waste gas through the pile. In particular, the intermediate product is piled up in front of a through-hole in the furnace and the at least part of the evacuated waste gas is forced through the piled up intermediate product.

The process for manufacturing char from an input product comprising carbon is thus characterized by the following steps:
- providing the input product to a furnace;
- carbonizing the input product in the furnace by pyrolysis thereby obtaining an intermediate product comprising char and a waste gas;
- evacuating at least part of the waste gas from the furnace by first forcing the at least part of the waste gas through the intermediate product thereby obtaining an output product comprising the char; and
- obtaining the output product from the furnace;
   said process is further characterized in that:
   - the intermediate product is piled up in a pile in front of a through-hole in the furnace;
   - the at least part of the evacuated waste gas is forced through the piled up intermediate product;
   - the evacuating the at least part of the waste gas further comprises:
      - obtaining a solid-gas reaction between the waste gas and the char of the intermediate product;
      - by the solid-gas reaction, cracking molecules in the waste gas thereby obtaining an output waste gas;
      - evacuating the output waste gas from the furnace.

Said process is typically characterized in that all steps, including carbonizing the input product, piling-up the intermediate product and forcing the at least part of the waste gas through the intermediate product, take place in the same furnace, which results in a compact and economically interesting system.

Typical carbonization processes spread the input product in a thin layer or bed in order to make the carbonization as efficient as possible, i.e., such that the waste gas can be quickly separated in order to obtain the intermediate product comprising the char. While the formation of such a thin layer is advantageous for the pyrolysis, it is less advantageous for the further solid-gas reaction between the waste-gas and the intermediate product. Therefore, by creating a pile of the intermediate product, the waste gas will make a better contact with the char in the intermediate product thereby improving the cracking process. Piling up should be understood as enlarging the cross-section of the intermediate product in a plane perpendicular to the moving direction from the input product towards the intermediate product.

According to an embodiment, the input product is obtained from an input feed at a first end of the furnace and the output product is obtained from an output feed at a second end of the furnace; and wherein the waste gas is extracted at the second end.

As the intermediate product and thus also the output product is collected at the second end of the surface, also the extraction is done near this second end. Contrary to some processes as known in the art, the waste gas is thus not evacuated at the input end.

According to a further embodiment the process further comprises:
- during the pyrolysis, transferring the input product from the input feed towards the output feed of the furnace while it is processed into the intermediate product; and
- before the output feed, piling up the intermediate product in front of a through-hole arranged between the intermediate product and the output feed; and wherein the cross-section of the through-hole is such that the pile covers the through-hole; and
- evacuating the waste gas through the through-hole such that it is forced through the pile; and
- collecting the output product at the output feed after transfer through the through-hole.

The process is thus a continuous process wherein the input product undergoes the pyrolysis while being transported from the input feed towards the output feed. When the product reaches the output feed, it is transformed into the intermediate product. The piling up of the intermediate product is then achieved by hindering the transfer of the intermediate product to the output end. The hindering is done by narrowing the passage of the intermediate product, i.e., by forcing it through a narrow section or a through hole. It is just before this narrow section that the waste gas is forced through the intermediate product in order to obtain the output product and then evacuated at the second end. A through-hole is thus to be understood as a narrowing of the passage from the input feed to the output feed in order to cause a piling up of the intermediate product.

It is an advantage that with this arrangement the invention can be applied to an existing pyrolysis process, either by retrofitting it into existing systems or by incorporating it into new designs.

More advantageously, the furnace is a rotary kiln furnace.

According to an embodiment, the process further comprises burning at least part of the waste gas and performing the carbonizing by at least part of the heat produced by the burning.

According to a second aspect, the invention relates to a process for manufacturing activated carbon comprising:
- providing a starting product comprising char to a second furnace; and
- activating the starting product in the second furnace thereby obtaining an intermediate product comprising activated carbon and waste gas;
- evacuating at least part of the waste gas from the second furnace by first forcing the at least part of the waste gas through the intermediate product thereby obtaining an output product comprising the activated carbon;
- obtaining the output product from the second furnace.

In a particular embodiment of the present invention, the process for manufacturing activated carbon according to said second aspect of the invention is a process for manufacturing activated carbon from a starting product wherein said starting product is the output product of the process according to the first aspect of the present invention.

In other words, the starting product for the process for manufacturing activated carbon according to said second aspect of the present invention can be the output product of the process according to the first aspect of the invention, or can be any other start product containing char.

In a further preferred embodiment, said starting product being the output product of the process according to the first aspect of the present invention first undergoes a forming step wherein sais output product, in particular char, is converted towards powder or pellets using techniques such as milling, sieving, extrusion, or coagulation.

Further, all the process steps performed according to the first aspect, are also applicable during activation of the char into activated carbon and will exhibit the same advantages as mentioned under the first aspect.

According to an embodiment, the activating is performed by an oxidizing gas and the evacuating further comprises forcing at least a part of the oxidizing gas through the intermediate product. This will result in a better contact between the intermediate product and the oxidizing gas which further results in a better activation of the carbon. The oxidizing gas may for example comprise overheated steam, carbon oxide (CO) and/or carbon dioxide (CO₂).

Advantageously, the starting product is obtained by performing the process according to the first aspect and providing the char from this process as starting material to the process according to the second aspect.

Summarized, before evacuating the output waste gas from the second furnace the following steps are implicitly performed by the above process according to the second aspect:
- obtaining a solid-gas reaction between the waste gas and the activated carbon and/or between the oxidizing gas and the activated carbon in the intermediate product, and
- by the solid-gas reaction, cracking molecules in the waste gas thereby obtaining an output waste gas.

Moreover, when the starting product comprises nitrogen, the waste gas will also comprise nitrogen containing components. By the evacuating according to the process according to the second aspect, the following steps will be implicitly performed:
- obtaining a solid-gas reaction between the nitrogen in the waste gas and the intermediate product; and
- by the solid-gas reaction, loading the intermediate product with the nitrogen thereby obtaining the output product that further comprises the activated carbon loaded with the nitrogen.

The activated carbon in the output product will thus be loaded with the nitrogen from the waste gas, i.e., the nitrogen is encapsulated into the pores and on the surface of the activated carbon. It is thus an advantage that the resulting waste gas will have a lower fraction of nitrogen oxides.

Moreover, by selecting the amount of nitrogen in the starting product, the amount of loading of nitrogen can be selected. Therefore, it is an advantage that, by the above process, activated carbon can be obtained that is loaded with nitrogen while having a waste gas with less nitrogen oxides.

According to an embodiment, the process comprises the step of piling up the intermediate product in a pile in the second furnace and evacuating the waste gas through the pile.

According to an embodiment, the starting product is obtained from an input feed at a first end of the furnace and the output product is obtained from an output feed at a second end of the furnace; and wherein the waste gas is extracted at the second end.

According to a further embodiment the process according to the second aspect further comprises:
- during the activation, transferring the starting product from the input feed towards the output feed of the furnace while it is processed into the intermediate product; and
- before the output feed, piling up the intermediate product in front of a through-hole arranged between the intermediate product and the output feed; and wherein the cross-section of the through-hole is such that the pile covers the through-hole; and
- evacuating the waste gas through the through-hole such that it is forced through the pile; and
- collecting the output product at the output feed after transfer through the through-hole.

More advantageously, the second furnace is a rotary kiln furnace.

According to an embodiment, the process further comprises burning at least part of the waste gas and performing the activation by at least part of the heat produced by the burning.

In the activation process according to this second aspect of the present invention, the piling-up will result in a better and faster activation of the product. In other words, the activation gas will make a better contact with the product thereby increasing the pore formation. This in combination with the evacuated gasses and molecules that react in the solid-gas reaction improves the cracking. Furthermore, during said process, contact between the oxidizing gas and the intermediate product is improved thereby increasing the reaction and decreasing the reaction time and the amount of oxidizing gas needed. In addition, the volatized nitrogen gases will react with the activated carbon leading to incorporation of part of said gases in the activated carbon. Due to the reaction between the volatised organic molecules with the carbon of the activated carbon, a cleaner syngas or waste gas is produced with reduced nitrogen oxide levels.

According to a third aspect, the invention relates to a device for manufacturing char from an input product comprising carbon; the device comprising:
- an input feed for providing the input product into a furnace; and
- an output feed for obtaining an output product comprising the char from the furnace; and
- the furnace arranged to carbonize the input product by pyrolysis into an intermediate product comprising char and into waste gas;
- gas extraction means arranged to extract the waste gas from the furnace through the intermediate product thereby obtaining the output material comprising the char.

Summarized, before evacuating the output waste gas from the furnace the following steps are implicitly performed by the device according to the third aspect, i.e., the device is arranged to:
- obtain a solid-gas reaction between the waste gas and the char of the intermediate product, and
- by the solid-gas reaction, crack molecules in the waste gas thereby obtaining an output waste gas.

Moreover, when the input product comprises nitrogen, the waste gas will also comprise nitrogen containing components. When performing the evacuating by the device according to the third aspect, the following steps will be implicitly performed:
- obtaining a solid-gas reaction between the nitrogen in the waste gas and the intermediate product; and
- by the solid-gas reaction, loading the intermediate product with the nitrogen thereby obtaining the output product that further comprises the nitrogen.

According to an embodiment, the device is further arranged to pile up the intermediate product in a pile in the furnace and to evacuate the waste gas through the pile.

According to an embodiment, the input feed of the device is arranged at a first end of the furnace and the output feed is arranged at a second end of the furnace. The gas extraction means is then arranged to extract the waste gas at the second end.

According to a further embodiment the device further comprises:
- transferring means arranged in the furnace for transferring the input product from the input feed towards the output feed of the furnace during the pyrolysis while it is processed into the intermediate product; and
- a through-hole arranged between the intermediate product and the output feed such that the intermediate product piles up in front of the through-hole and such that the pile covers the through-hole;
and wherein the evacuating means are further configured to evacuate the waste gas through the through-hole such that it is forced through the pile and to collect the output product at the output feed after transfer through the through-hole.

Advantageously, the furnace is a rotary kiln furnace.

According to an embodiment, the device further comprises a heater for burning at least part of the waste gas and performing the carbonizing by at least part of the heat produced by the burning.

According to a fourth aspect, the invention relates to a device for manufacturing activated carbon from a starting product comprising char; the device comprising:
- an input feed for providing the starting product into a furnace; and
- an output feed for obtaining an output product comprising the activated carbon from the furnace; and
- the furnace arranged to activate the starting product into an intermediate product comprising activated carbon and into waste gas;
- gas extraction means arranged to extract the waste gas from the furnace through the intermediate product thereby obtaining the output material comprising the activated carbon.

According to an embodiment, the device further comprises a second input feed for providing an oxidizing gas to the furnace. The gas extraction means is then further arranged to extract at least part of the oxidizing gas from the furnace through the intermediate product. The oxidizing gas may for example comprise overheated steam, carbon oxide (CO) and/or carbon dioxide (CO₂)

Summarized, before evacuating the output waste gas from the furnace the following steps are implicitly performed by the device according to the fourth aspect, i.e., the device is arranged to:
- obtain a solid-gas reaction between the waste gas and the activated carbon or between the oxidizing gas and the activated carbon in the intermediate product, and
- by the solid-gas reaction, crack molecules in the waste gas thereby obtaining an output waste gas.

Moreover, when the starting product comprises nitrogen, the waste gas will also comprise nitrogen containing components. When performing the evacuating by the device according to the fourth aspect, the following steps will be implicitly performed:
- obtaining a solid-gas reaction between the nitrogen in the waste gas and the intermediate product; and
- by the solid-gas reaction, loading the intermediate product with the nitrogen thereby obtaining the output product that further comprises the nitrogen as activated carbon loaded with nitrogen.

According to an embodiment, the device according to the fourth aspect is further arranged to pile up the intermediate product in a pile in the furnace and to evacuate the waste gas through the pile.

According to an embodiment, the input feed of the device is arranged at a first end of the furnace and the output feed is arranged at a second end of the furnace. The gas extraction means is then arranged to extract the waste gas at the second end.

According to a further embodiment the device according to the fourth aspect further comprises:
- transferring means arranged in the furnace for transferring the starting product from the input feed towards the output feed of the furnace during the pyrolysis while it is processed into the intermediate product; and
- a through-hole arranged between the intermediate product and the output feed such that the intermediate product piles up in front of the through-hole and such that the pile covers the through-hole;
and wherein the evacuating means are further configured to evacuate the waste gas through the through-hole such that it is forced through the pile and to collect the output product at the output feed after transfer through the through-hole.

Advantageously, the furnace is a rotary kiln furnace.

According to an embodiment, the device further comprises a heater for burning at least part of the waste gas and performing the activation by at least part of the heat produced by the burning.

According to a fifth embodiment, the invention relates to a system for manufacturing activated carbon from an input product comprising carbon, the system comprising:
- the device according to the third aspect arranged to manufacture char from the input product comprising the carbon; and
- the device according to the fourth aspect arranged to take the char from the device according to the third aspect as starting product and to manufacture therefrom activated carbon.

The present invention is further summarized in the following ***numbered embodiments:***
1. Process for manufacturing char from an input product (120) comprising carbon; the process comprising the following steps:
   - providing the input product (120) to a furnace (102);
   - carbonizing the input product in the furnace by pyrolysis thereby obtaining an intermediate product (121) comprising char and a waste gas (130);
   - evacuating at least part of the waste gas (130) from the furnace by first forcing the at least part of the waste gas through the intermediate product thereby obtaining an output product (122) comprising the char; and
   - obtaining the output product (122) from the furnace (102).
      said process characterized in that:
      - the intermediate product (121) is piled up in a pile in front of a through-hole (108) in the furnace;
      - the at least part of the evacuated waste gas (130) is forced through the piled up intermediate product (121); and
      - the evacuating the at least part of the waste gas (130) further comprises:
         - obtaining a solid-gas reaction between the waste gas (130) and the char of the intermediate product (121);
         - by the solid-gas reaction, cracking molecules in the waste gas (130) thereby obtaining an output waste gas (131);
         - evacuating the output waste gas (131) from the furnace (102).
2. Process according to numbered embodiment 1 wherein the input product comprises at least 50% in weight of carbon.
3. Process according to numbered embodiments 1 or 2 wherein the input product (120) comprises nitrogen; and wherein, by the carbonizing, the waste gas (130) further comprises nitrogen; and wherein the evacuating the at least part of the waste gas further comprises:
   - obtaining a solid-gas reaction between the nitrogen in the waste gas (130) and the intermediate product (121);
   - by the solid-gas reaction, loading the intermediate product (121) with the nitrogen thereby obtaining the output product (122) that further comprises the nitrogen.
4. Process according to any one of the preceding numbered embodiments wherein the input product (120) comprises MDF.
5. Process according to any one of the preceding numbered embodiments wherein the input product (120) is obtained from an input feed (101) at a first end of the furnace (102) and the output product (122) is obtained from an output feed (103) at a second end of the furnace; and wherein the waste gas (131) is extracted at the second end.
6. Process according to numbered embodiment 5 wherein the process further comprises:
   - during the pyrolysis, transferring the input product (120) from the input feed (101) towards the output feed (103) of the furnace while it is processed into the intermediate product (121); and
   - before the output feed (103), piling up the intermediate product in front of a through-hole (108) arranged between the intermediate product (121) and the output feed (103); and wherein the cross-section of the through-hole (108) is such that the pile covers the through-hole (108); and
   - evacuating the waste gas (130) through the through-hole (108) such that it is forced through the pile; and
   - collecting the output product (122) at the output feed (103) after transfer through the through-hole (108).
7. Process according to any one of the preceding numbered embodiments wherein the furnace is a rotary kiln furnace (102).
8. Process according to any one of the preceding numbered embodiments further comprising burning at least part of the output waste gas (131) and performing the carbonizing by at least part of the heat (109) produced by the burning.
9. Process for manufacturing activated carbon from a starting product (122, 170) containing char; said starting product (122, 170) being the output product according to any one of numbered embodiments 1 to 8; the process comprising the following steps:
   - providing the starting product (122, 170) to a second furnace (152);
   - activating the starting product in the second furnace thereby obtaining an intermediate product (171) comprising activated carbon and waste gas (180);
   - evacuating at least part of the waste gas from the second furnace by first forcing the at least part of the waste gas (180) through the intermediate product (171) thereby obtaining an output product (152) comprising the activated carbon; and
   - obtaining the output product (152) comprising the activated carbon from the second furnace.
10. The process according to numbered embodiment 9, wherein the evacuating the at least part of the waste gas (180) further comprises:
   - obtaining a solid-gas reaction between the waste gas (180) and the intermediate product (171) comprising activated carbon;
   - by the solid-gas reaction, cracking molecules in the waste gas (180) thereby obtaining an output waste gas (181).
11. The process according to numbered embodiments 9 or 10, wherein the starting product (122, 170) comprises nitrogen; and wherein the evacuating the at least part of the waste gas (180) further comprises:
   - obtaining a solid-gas reaction between the nitrogen in the waste gas (180) and the intermediate product (171) comprising activated carbon;
   - by the solid-gas reaction, loading the intermediate product (171) with nitrogen thereby obtaining the output product (152) that further comprises the activated carbon loaded with the nitrogen.
12. The process according to anyone of numbered embodiments 9 to 11, further comprising the step of piling up the intermediate product (171) in a pile in the second furnace and evacuating the waste gas (180) through the pile.
13. The process according to anyone of numbered embodiments 9 to 12 wherein the starting product (122, 170) is obtained from an input feed (151) at a first end of the second furnace (152) and the output product (172) is obtained from an output feed (153) at a second end of the furnace (152); and wherein the waste gas (180) is extracted at the second end.
14. The process according to numbered embodiment 13 wherein the process further comprises:
   - during the activation, transferring the starting product (122, 170) from the input feed (151) towards the output feed (153) of the second furnace while it is processed into the intermediate product (171); and
   - before the output feed (153), piling up the intermediate product (171) in front of a through-hole (158) arranged between the intermediate product (171) and the output feed (153); and wherein the cross-section of the through-hole (158) is such that the pile covers the through-hole (158); and
   - evacuating the waste gas (180) through the through-hole (158) such that it is forced through the pile; and
   - collecting the output product (172) at the output feed after transfer through the through-hole (158).
15. The process according to anyone of numbered embodiments 9 to 14 wherein the furnace is a rotary kiln furnace (152).
16. The process according to anyone of numbered embodiments 9 to 15 further comprising burning at least part of the output waste gas (181) and performing activation by at least part of the heat (159) produced by the burning.
17. Process for manufacturing activated carbon from a starting product (122, 170) containing char; the process comprising the following steps:
   - providing the starting product (122, 170) to a furnace (152);
   - activating the starting product in the furnace thereby obtaining an intermediate product (171) comprising activated carbon and waste gas (180);
   - evacuating at least part of the waste gas from the second furnace by first forcing the at least part of the waste gas (180) through the intermediate product (171) thereby obtaining an output product (152) comprising the activated carbon; and
   - obtaining the output product (152) comprising the activated carbon from the furnace;
      said process characterized in that:
      - the intermediate product (171) is piled up in a pile in front of a through- hole (158) in the furnace;
      - the at least part of the evacuated waste gas (180) is forced through the piled up intermediate product (171); and
      - the evacuating the at least part of the waste gas (180) further comprises:
         - obtaining a solid-gas reaction between the waste gas (180) and the intermediate product (171) comprising activated carbon;
         - by the solid-gad reaction, cracking molecules in the waste gas (180) thereby obtaining an output waste gas (181).
         - evacuating the output waste gas (181) from the furnace (150).
18. The process according to numbered embodiment 17, wherein the starting product (122, 170) comprises nitrogen; and wherein the evacuating the at least part of the waste gas (180) further comprises:
   - obtaining a solid-gas reaction between the nitrogen in the waste gas (180) and the intermediate product (171) comprising activated carbon;
   - by the solid-gas reaction, loading the intermediate product with nitrogen thereby obtaining the output product that further comprises the activated carbon loaded with the nitrogen.
19. The process according to numbered embodiments 17 or 18, wherein the starting product (122, 170) is obtained from an input feed (151) at a first end of the furnace (152) and the output product (172) is obtained from an output feed at a second end of the furnace (152); and wherein the waste gas (180) is extracted at the second end.
20. The process according to numbered embodiment 19, wherein the process further comprises:
   - during the activation, transferring the starting product (122, 170) from the input feed (151) towards the output feed (153) of the furnace while it is processed into the intermediate product (171); and
   - before the output feed (153), piling up the intermediate product (171) in front of a through-hole (158) arranged between the intermediate product and the output feed (171); and wherein the cross-section of the through- hole (158) is such that the pile covers the through-hole (158); and
   - evacuating the waste gas (180) through the through-hole (158) such that it is forced through the pile; and
   - collecting the output product (172) at the output feed after transfer through the through-hole (158).
21. The process according to anyone of numbered embodiments 17 to 20 wherein the furnace is a rotary kiln furnace (152).
22. The process according to anyone of numbered embodiments 17 to 21 further comprising burning at least part of the waste gas (181) and performing activation by at least part of the heat (159) produced by the burning.
23. Process for manufacturing activated carbon from an input product (120) comprising carbon; the process comprising the following steps:
   - performing the steps according to any one of the numbered embodiments 1 to 8 thereby obtaining a product comprising char; and
   - performing the steps according to anyone of numbered embodiments 9 to 16 or performing the steps according to any one of the numbered embodiments 17 to 22 on the char as starting product thereby obtaining the activated carbon.
24. Device (100) for manufacturing char from an input product (120) comprising carbon; the device comprising:
   - an input feed (101) for providing the input product (120) into a furnace (102); and
   - an output feed (103) for obtaining an output product (103) comprising the char from the furnace (102); and
   - the furnace arranged to carbonize the input product by pyrolysis into an intermediate product (121) comprising char and into waste gas (130);
   - gas extraction means (106) arranged to extract the waste gas from the furnace through the intermediate product thereby obtaining the output material comprising the char.
25. Device (200) for manufacturing activated carbon from a starting product (170) comprising char; the device comprising:
   - an input feed (151) for providing the starting product into a furnace (152); and
   - an output feed (153) for obtaining an output product (172) comprising the activated carbon from the furnace; and
   - the furnace (152) arranged to activate the starting product into an intermediate product (171) comprising activated carbon and into waste gas (180);
   - gas extraction means (156) arranged to extract the waste gas from the furnace through the intermediate product thereby obtaining the output material comprising the activated carbon.
26. System for manufacturing activated carbon from an input product (120) comprising carbon; the system comprising:
   - the device according to numbered embodiment 24 arranged to manufacture char from the input product comprising the carbon; and
   - the device according to numbered embodiment 25 arranged to take the char from the device according to numbered embodiment 24 as starting product and to manufacture therefrom the activated carbon.

### Brief Description of the Drawings

Fig. 1 illustrates a system for manufacturing activated carbon from a carbon containing input material according to an embodiment of the invention; and
Fig. 2 illustrates a system for manufacturing activated carbon from a carbon containing input material according to a second embodiment of the invention.

### Detailed Description of Embodiment(s)

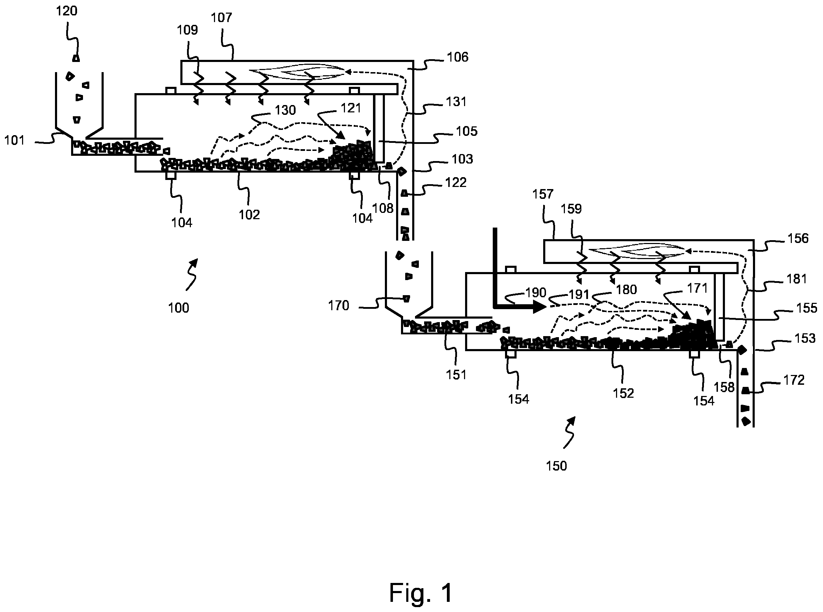

Fig. 1 illustrates a system (100 and 150) for manufacturing activated carbon 172 from a carbon containing input material 120. The system comprises a first device 100 for manufacturing char 122, 170 from the input material 120 according to a first manufacturing process and a second device 150 for manufacturing activated carbon 172 from the char 122, 170 according to a second subsequent manufacturing process. The two devices may further be used separately, i.e., for making char or for making activated carbon from the char.

The carbon containing input material 120 may be any material that comprises a sufficient degree of carbon (C) for manufacturing char by carbonization, also known as pyrolysis. Such materials are well known in the art and advantageously contain at least 50% by weight of carbon. The system 100, 150 may also take input material 120 with a high amount of nitrogen (N) ranging up to 60 % in weight. Examples of such input material 120 are Medium-Density Fibreboard (MDF), particle board or chipboard, melamine (urea) formaldehyde, polyacrylonitrile (PAN), grain products, fruit pits, palm fronds and nutshells. By the manufacturing processes in devices 100, 150 the resulting char and activated carbon will be loaded with the nitrogen from the input material, i.e., the nitrogen will be captured and/or bonded with and/or to the pores and surface in the char 122, 170 and the activated carbon 172. Therefore, waste gasses 131, 181 produced by the devices 100, 150 will contain much less nitrogen-containing volatiles as devices according to the state of the art.

In device 100, a continuous carbonization process is performed. The process starts at an input feed 101 by which the carbon containing input material 120 is provided to a furnace 102 at a first end, i.e., at the input end. In the furnace 102, the input material is heated in an oxygen deficient atmosphere such that the carbon containing input material is carbonized into an intermediate product 121 that comprises char. Depending on the purity of the input material 120, the intermediate material may also comprise some degree of by-products such as ashes. Preferably, the temperature during carbonization is at least 500 degrees Celsius; more preferably, the temperature is between 500 degrees Celsius and 800 degrees Celsius; even more preferably between 600 degrees Celsius and 800 degrees Celsius.

Advantageously, the furnace is a rotary kiln. The furnace is then in the form of a cylindrical vessel 102 wherein the input feed 101 is located at the input side of the vessel. The vessel 102 is rotatable on a plurality of rollers 104 or any other suitable suspension system and arranged such that the input material 120 continuously moves from the input end of the vessel 102 towards the output feed 103 located at the output end. The moving of material may be established by a spiral shaped wall arranged inside the vessel or by a small inclination of the vessel, e.g., ranging from 0.5 degrees to 3 degrees. By the rotation of the furnace 102, e.g., at about 1 to 10 rotations per minute, the input material 120 will then continuously move towards the output end while being converted into the intermediate material 121 containing the char.

Heating of the furnace or vessel 102 may be done directly or indirectly. In Fig. 1 an indirect heat transfer 109 from a heater 107 is shown. In such a case, the creation of the heat is done outside the furnace 102 and the heat is then transferred through the wall of the furnace into the furnace. In such case, the heater is typically arranged around the complete circumference of the furnace in order to achieve an evenly distributed temperature in the oven. Alternatively, the heating may also be done directly, i.e., by creating the heat inside the furnace 102 for example by burning of a gas. In such a case the gas will be supplied by a burner-pipe (not shown). As the carbonization is done in an oxygen deficient atmosphere, also an oxidizer such as oxygen (O₂) for oxidizing the gas will be supplied into the furnace 102 thereby generating heat inside the furnace 102.

Besides the conversion into a solid-state intermediate material 121, the carbonization also generates a gaseous output stream in the form of waste gas 130. The waste gas 130 contains tar and volatile organic compounds including nitrogen oxides (NOx) precursor gasses. In order to evacuate the waste gas 130, the device 100 comprises an evacuation system 106. The evacuation system 106 is arranged near the output feed 103, i.e., at the output end of the furnace 102, such that the waste gasses 130 will travel towards the output end of the furnace 102. The evacuation system 106 is also arranged such that the waste gas 130 is first forced into and through the intermediate product 121 and thus into the char located near the output feed 103 of the furnace. By this forced evacuation, contact between the hot waste gas 130 and the char is achieved which results in a solid-gas reaction between the hot waste gas and the hot char within the intermediate product 121. By this reaction, the complex organic molecules in the waste gas are further cracked into smaller molecules thereby reducing the amount of tar and complex molecules. After going through the intermediate product 121, the output waste gas 131 is evacuated from the furnace 102. Because of the cracking, the output waste gas 131 will contain less complex organic molecules in comparison to the waste gas 130 before the solid-gas reaction. In a similar way, a solid-gas reaction will occur with the nitrogen oxides precursor gasses in the waste gas 130. During the reaction, the intermediate product 121 will be loaded with the nitrogen from the waste gas, i.e., the nitrogen is encapsulated into the pores and onto the surface of the char in the intermediate product 121. After the forced evacuation, the char is released from the furnace 102 as output product 122. If needed, further by-products such as ashes may be separated before supplying the output product 122 to the next device 150 for activation of the char.

Advantageously, the forced evacuation of the waste gas 130 is performed by piling up the intermediate product 121 before the output feed 103. In order to achieve this, a blocking element 105 is arranged at the end of the furnace, just before the output feed 103. The blocking element 105 is arranged such that the exit of the moving intermediate product 121 is partially blocked and the intermediate product 121 forms a heap just before the blocking element 105. The partial blocking may be done be a narrow section 108, further referred to as through-hole 108, in the blocking element 105. The diameter of the through-hole will depend on the throughput speed of the intermediate product 121 in the furnace 102. The blocking element is thus arranged such that the waste gas 130 can only exit the furnace 102 through the intermediate product 121 by the through-hole. This ensures that solid-gas reaction between the intermediate product 121 and the waste gas 130 is assured. In order to force the waste gas 130 through the through-hole a pressure difference may be created between the evacuation system 106 and the furnace 102 such that a suction effect is created thereby forcing the waste gas 130 passed the blocking element 105 and thus through the intermediate product 121.

The output waste gas 131 may then further be recuperated as fuel gas in a burner 107 that supplies its heat 109 back to the furnace 102.

System 100-150 further comprises a second device 150 for activating the char 170 that is obtained from the first device 100 to activated carbon 172. The principle of device 150 is largely similar to that of device 100. Device 150 comprises an input feed 151 similar to that of 101. The char 170 from device 100 is collected in the input feed 151 and provided by the input feed 151 to the furnace 152. Furnace 152 is arranged for activation of the char 151 by an oxidizing gaseous stream 191 comprising for example steam, carbon oxide or carbon dioxide. To this purpose, device 152 comprises an input pipe 190 for injection of the oxidizer 191 into the furnace 152.

For achieving the activation, the input char product 170 is further heated to temperatures of at least 800 degrees Celsius, preferably at least 900 degrees Celsius, more preferably at least 950 degrees Celsius and may even go up to 1100 degrees Celsius. The furnace 152 may be heated directly or indirectly. In Fig. 1 an indirect heat transfer 159 from a heater 157 is shown. In such a case, the creation of the heat is done outside the furnace 152 and the heat is then transferred through the wall of the furnace into the furnace 152. In such case, the heater is typically arranged around the complete circumference of the furnace in order to achieve an evenly distributed temperature in the oven. Alternatively, the heating may also be done directly, i.e., by creating the heat inside the furnace 152 for example by burning a gas. In such a case the gas will be supplied by a burner-pipe (not shown). Also an oxidizer such as oxygen (O₂) for oxidizing the gas may be supplied into the furnace 152 thereby generating the heat inside the furnace 152.

Similar to furnace 102, furnace 152 may be a rotary kiln. The furnace is then in the form of a cylindrical vessel 152 wherein the input feed 151 is located at the input side of the vessel. The vessel 152 is rotatable on a plurality of rollers 154 or any other suitable suspension system and arranged such that the input material 170 continuously moves from the input end 151 of the vessel 152 towards the output feed 153 located at the output end. The moving of material may be established by a spiral shaped wall arranged inside the vessel or by a small inclination of the vessel, e.g., ranging from 0.5 degrees to 3 degrees. By the rotation of the furnace 152, e.g., at about 1 to 10 rotations per minute, the input material 170 will then continuously move towards the output end while being converted into the intermediate material 171 containing the activated carbon. The activation is established by an oxidizing reaction between the oxidizer 191 and the input material 151 thereby increasing the surface area of the carbon.

Besides the conversion into a solid-state intermediate material 171, the activation also generates a gaseous output in the form of waste gas 180. The waste gas 180 may again contain tar and volatile organic compounds including nitrogen oxides (NOx) precursor gasses. In order to evacuate the waste gas 180, the device 150 also comprises an evacuation system 156. The evacuation system 156 is arranged near the output feed 153, i.e., at the output end of the furnace 152, such that the waste gasses 180 will travel towards the output end of the furnace 152. The evacuation system 156 is also arranged such that the waste gas 180 is first forced into and through the intermediate product 171 and thus into the activated carbon located near the output feed 153 of the furnace.

By this forced evacuation, contact between the hot waste gas 180 and the intermediate activated carbon 171 is achieved which results in a solid-gas reaction between the hot waste gas and the hot activated carbon within the intermediate product 171. By this reaction, the complex organic molecules in the waste gas are further cracked into smaller molecules thereby reducing the amount of tar and complex molecules. After going through the intermediate product 171, the obtained output waste gas 181 is evacuated from the furnace 151. Because of the cracking, the output waste gas 181 will contain less complex organic molecules when compared with the waste gas 180 before the solid-gas reaction. In a similar way, a solid-gas reaction will occur with the nitrogen oxides precursor gasses in the waste gas 180. During the reaction, the intermediate product 171 will be loaded with the nitrogen from the waste gas, i.e., the nitrogen is encapsulated into the pores and on the surface of the activated carbon in the intermediate product 171. After the forced evacuation, the activated carbon is released from the furnace 151 as output product 172.

The same evacuation may also be done with the oxidizer 191 that is used for the activation. In a conventional rotary kiln or activation reactor, the activation will occur by a superficial solid-gas reaction between the char 151 and the oxidizing gas 191. Upon rotation of the furnace 152, the contact between the char 151 and the oxidizing gas 191 is further increased. However, the contact and thus also the activation is only achieved on the surface of the product stream. By also evacuating the oxidizer 191 together with the waste gas 180, the oxidizer is brought in further contact with the intermediate product 171. As the oxidizing gas is forced through the intermediate product 171, the solid-gas reaction between the oxidizer and the carbon will not only occur on the surface of the product stream and pile, but also with the product that is beneath the surface. Therefore, the forced evacuation of the oxidizer 191 through the intermediate product will lead to a better activation of the carbon and thus to an activated carbon with an increased surface per unit weight.

Similarly to device 100, the forced evacuation of the waste gas 180 and/or the oxidizer 191 is performed by piling up the intermediate product 171 before the output feed 153. In order to achieve this, a blocking element 155 is arranged at the end of the furnace, just before the output feed 153. The blocking element 155 is arranged such that the exit of the moving intermediate product 171 is partially blocked such the intermediate product 171 forms a heap just before the blocking element. The partial blocking may be done be a narrow section 158, further referred to as through-hole 158, in the blocking element 155. The diameter of the through-hole will depend on the throughput speed of the intermediate product 171 in the furnace 152. The blocking element is thus arranged such that the waste gas 180 and/or oxidizer 191 can only exit the furnace 152 through the intermediate product 171 by the through-hole 158. This ensures that the solid-gas reaction between the intermediate product 171 and the waste gas 130 and/or oxidizer 191 is assured. In order to force the waste gas 130 and/or oxidizer 191 through the through-hole a pressure difference may be created between the evacuation system 156 and the furnace 152 such that a suction effect is created thereby forcing the waste gas 180 and/or the oxidizer 191 passed the blocking element and thus through the intermediate product 171. The output waste gas 181 may then further be recuperated as fuel gas in a burner 157 that supplies its heat 159 back to the furnace 152.

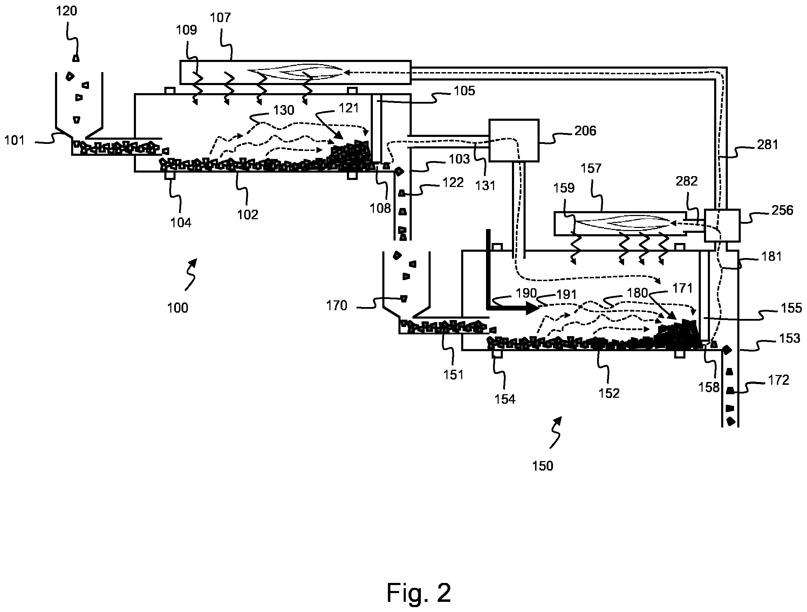

Fig. 2 illustrates an alternative setup of the system of Fig. 1. The difference lays in the setup of the evacuation system 206, 256. Parts of the system that remain unchanged in comparison with Fig. 1 are indicated with the same reference numbers as in Fig. 1. Only the differences will be described below. The system according to fig. 2 comprises a different evacuation system 206 for the evacuation of the output waste gas 131 from the first device 100. Instead of directly supplying the waste gas 131 to the heater 107 as gaseous fuel, the waste gas 131 is extracted by the extraction unit 206 from the first device 100 and supplied to the furnace 152 of the second device 150. The second device 150 on its turn also comprises an evacuation unit 256 which forces the output waste gas 131 from the first device 100 together with part of the oxidizer 191 and the waste gas 180 through the intermediate product 171. The advantage of this setup is that the complex molecules that resided in waste gas 131 are further cracked into even smaller molecules due to the solid-gas reaction inside the intermediate product 171. Furthermore, also nitrogen that was not loaded into the char 170 but resided in waste gas 131, can now be loaded into the activate carbon 171. This way, a higher amount of nitrogen in the activated carbon is obtained. The gaseous output stream 181 is then a result of oxidizer 191, the output waste gas 131 and waste gas 180. Output waste gas 181 may then further be supplied by the extraction unit 256 to the heater 107 and/or to the heater 157 where the gas is burned.

When manufacturing activated carbon by the system according to the above embodiments an overall amount of activated carbon of 10% to 50% of the weight of the input stream 120 can be obtained. The amount of char 170 obtained from the first reactor 100 is in the range of 20% to 90% of weight of the input stream 120. When using MDF as input stream 120, the amount of char 170 formed in the first reactor is in the range of 20% to 30 % of weight of the input stream 120. A preferred duration of the carbonization in the first device 100 is about 30 minutes while the typical preferred duration of the activation in the second device 150 is about 60 minutes. These durations determine other parameters such as the length of the reactor, the feed speed, e.g., 100 to 3000 kg per hour, the rotation of the reactor, e.g., 1 to 10 rotations per minute and the angle under which the reactor can be placed, e.g., 0.5 degrees to 3 degrees. One or more of these parameters can be fixed but other may also be adaptable during the manufacturing process by use of a suitable control system. The porosity quantified by the Iodine number of the active carbon obtained in the output stream 172 is minimum 800-900 mg/g, in particular minimum 900 mg/g. The porosity quantified by the Iodine number of the char 170 obtained in the first device 100 is 150 - 350 mg/g. Therefore, by the activation in device 150, a porosity increase in the second reactor of 157% to 650%, in particular of 228% to 650% can be achieved. When MDF is used as an input stream, the retention of nitrogen is at least 22% to 44%, i.e., at least 22% to 44% of the nitrogen that was present in the input product is retained in the activated carbon.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

### EXAMPLES

Pyrolysis and steam activation are executed in an especially designed continuous pilot rotary kiln reactor. The set-up can easily be modified to work with a pile and a throughput hole or without to achieve a classical set-up. Chars are produced by introducing MDF into the warm zone of the reactor at a predetermined temperature between 600 and 800°C. Specific reaction times and movement of material is established by a small inclination of the reactor, e.g., ranging from 0.5 degrees to 3 degrees in combination with rotation of the furnace at about 1 to 10 rotations per minute, the input material (MDF) will continuously move towards the output end while being converted into the intermediate material (Char) in a classical set-up and with the set-up according to the different embodiments of the invention. In both cases, the produced gases are condensed to evalaute the amount of condensable products. The activation of the chars is established by an oxidizing reaction between overheated steam and the chars thereby increasing the surface area of the carbon. Activations are carried out in both set-ups.

Nitrogen-content of MDF, chars and activated carbon is determined in quadruplicated by a Thermo Electron Fleas EA1112 calibrated using BBOT (2,5-Bis (5-tert-butyl-benzoxazol-2-yl) thiophene) as a standard. Performance of the produced activated carbons is tested by Iodine adsorption (iodine number) of the activated carbon, according to the ASTM standard ASTM-D4607-94. In this test, the relative activation level of unused or reactivated carbon by adsorption of iodine from an aqueous solution is measured. The amount of iodine absorbed (in milligrams) by 1 g of carbon using test conditions is called the iodine number (I₂ number).

**Table 1: Comparison between activation of char with a classical layout and with a process according to the present invention.**

| **Test** | **Classical layout** | **With pile and throughput hole** |
|---|---|---|
| **Oil and tar fraction** | 15 - 30 wt% | 0.5 - 10 wt% |
| **N-content MDF** | 4.5 wt% | 4.5 wt% |
| **N-content char** | 2-4 wt% | 4 - 4.5 wt% |
| **N-content activated carbon** | 0 - 1 wt% | 1 - 2 wt% |
| **I₂-number** | 800 - 950 mg/g | 900 - 1150 mg/g |

## Claims

1. Use of a carbon and nitrogen containing material as a feedstock for manufacturing an activated carbon having a nitrogen-content of at least 1 wt%.

2. The use according to claim 1, wherein the activated carbon has an Iodine (I₂) number of at least 800 mg/g.

3. The use according to claim 1, wherein the activated carbon has an Iodine (I₂) number in the range of 225 to 2275 mg/g, or in the range of 342 to 2275 mg/g, or in the range of 900-1150 mg/g.

4. The use according to any one of the preceding claims, wherein the carbon and nitrogen containing material comprises at least one of urea-formaldehyde, urea-melamine-formaldehyde, melamine-formaldehyde or a combination of one or more thereof.

5. The use according to any one of the preceding claims, wherein the carbon and nitrogen containing material is medium-density fibreboard (MDF) and/or particle board.

6. The use according to claim 5, wherein the carbon and nitrogen containing material is MDF and the activated carbon retains at least 15%, in particular at least 22%, such as at least 15% to 25%, or at least 22% to 44%, i.e., at least 22% to 44% of the nitrogen that was present in the MDF input stream.

7. The use according to any one of claims 1-5, wherein the nitrogen-content is maximally 2 wt%.

8. The use according to any one of claims 1-7, wherein the activated carbon comprises:
| | |
|---|---|
| an N-content of | 1 - 2 wt%, and |
| an I₂-number of | 900 - 1150 mg/g. |

9. Activated carbon having a nitrogen-content of at least, or greater than, 1 wt%.

10. The activated carbon according to claim 8, wherein the activated carbon has an Iodine (Iz) number of at least 800 mg/g.

11. The activated carbon according to claim 9, wherein the activated carbon has an Iodine (I₂) number in the range of 225 to 2275 mg/g, or in the range of 342 to 2275 mg/g, or in the range of 900-1150 mg/g.

12. The activated carbon according to any one of claims 8 to 10, wherein the nitrogen-content is maximally 2 wt%.

13. The activated carbon of any one of claims 9-12, wherein the activated carbon comprises:
| | |
|---|---|
| an N-content of | 1 - 2 wt%, and |
| an I₂-number of | 900 - 1150 mg/g. |
